Europäisches Patentamt

European Patent Office

Office européen des brevets

(19)

(11) Veröffentlichungsnummer: **0 122 508**
**B1**

# EUROPÄISCHE PATENTSCHRIFT

(12)

(45) Veröffentlichungstag der Patentschrift:
09.12.87

(21) Anmeldenummer: **84103216.2**

(22) Anmeldetag: **23.03.84**

(51) Int. Cl.⁴: **C 03 B 27/04,** C 03 B 35/16

(54) Verfahren zum Transportieren von Glas- oder Glaskeramiktafeln durch eine Horizontalhärteanlage.

(30) Priorität: **16.04.83 DE 3313909**

(43) Veröffentlichungstag der Anmeldung:
**24.10.84 Patentblatt 84/43**

(45) Bekanntmachung des Hinweises auf die Patenterteilung:
**09.12.87 Patentblatt 87/50**

(84) Benannte Vertragsstaaten:
**FR GB IT NL**

(56) Entgegenhaltungen:
DE - B - 1 224 887
FR - A - 2 164 455
LU - A - 55 057

**Die Akte enthält technische Angaben, die nach dem Eingang der Anmeldung eingereicht wurden und die nicht in dieser Patentschrift enthalten sind.**

(73) Patentinhaber: **Schott Glaswerke,
Hattenbergstrasse 10, D-6500 Mainz (DE)**

(84) Benannte Vertragsstaaten: **FR IT NL**

(73) Patentinhaber: **Carl-Zeiss-Stiftung trading as SCHOTT GLASWERKE, Hattenbergstrasse 10,
D-6500 Mainz 1 (DE)**

(84) Benannte Vertragsstaaten: **GB**

(72) Erfinder: **Günthner, Franz, Tucholskyweg 46,
D-6500 Mainz-Lerchenberg (DE)**

(74) Vertreter: **Schmitz, Waldemar, Dipl.-Ing. et al, Büro Dr. J. Rasper Bierstadter Höhe 22, D-6200 Wiesbaden (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zum Transportieren von Glas- oder Glaskeramiktafeln durch eine Horizontalhärteanlage, bei welchem die Tafeln mit vorgegebener Geschwindigkeit (Eingangsgeschwindigkeit) ($V_1$) einen Tunnelofen und daran anschliessend eine Kühlstrecke durchlaufen, wobei die Tafel oder Reihe von nebeneinander liegenden Tafeln mit einer gegenüber dieser Eingangsgeschwindigkeit erhöhten Geschwindigkeit ($V_2$) in die Kühlstrecke transportiert wird und die Geschwindigkeit dieser Tafel, bzw. Reihe von Tafeln zu dem Zeitpunkt wieder reduziert wird, zu dem diese Tafel bzw. Reihe von Tafeln in die Kühlstrecke eingetreten ist.

Horizontalhärteanlagen mit einheitlicher Geschwindigkeit über die ganze Länge müssen sehr lang sein, damit die Tafel in der letzten Phase der Erwärmung nicht durchhängt und beim Einlaufen in die Abkühlstrecke nicht zulange ungleichmässig abgeschreckt und dadurch verzogen wird.

Aus der DE-B-1224887 ist eine Horizontalhärteanlage bekannt, bei der die Tafeln im Ofen auf eine höhere Geschwindigkeit gebracht werden, mit der sie dann den Ofenausgang verlassen und in die Kühlstrecke eintreten. Dort werden die Tafeln wieder auf eine geringere Geschwindigkeit abgebremst. In diesem Verfahren gibt es insgesamt fünf getrennte Streckenabschnitte, die separat angetrieben und gesteuert werden.

Aus der LU-A-55057 ist eine Anlage bekannt, bei der die Glastafeln am Ofenausgang beschleunigt werden und dann in einen ersten Kühlabschnitt gelangen. Beim Durchgang durch diesen ersten Kühlabschnitt wird die Geschwindigkeit dieser Tafeln wieder erniedrigt bis auf die Eingangsgeschwindigkeit. Zwischen diesem ersten und einem zweiten Kühlabschnitt wird dann die Geschwindigkeit noch einmal erhöht und schliesslich wird beim Eintreten in diese zweite Kühlstrecke die Geschwindigkeit der Tafeln wieder auf die Eingangsgeschwindigkeit reduziert.

Aufgabe der vorliegenden Erfindung ist ein Verfahren zum Transportieren von Glas- oder Glaskeramiktafeln durch eine Horizontalhärteanlage anzugeben, bei dem verhindert werden soll, dass sich die noch im Ofen befindlichen, langsam bewegten Tafeln, bei kleinem Tafelabstand und hohem Belegungsgrad auf die schnellaufenden Rollen des Transporters für die schnelle Überführung auflaufen und durch die Relativbewegung zwischen Rolle und Glas verletzt werden.

Dieses Ziel wird mit einem Verfahren gemäss dem Patentanspruch erreicht. Bei dem erfindungsgemässen Verfahren wird die am Ofenausgang angelangte Tafel oder Reihe von nebeneinander liegenden Tafeln mit einer gegenüber der Eingangsgeschwindigkeit stark erhöhten Geschwindigkeit in die Kühlstrecke transportiert, wobei gleichzeitig die Geschwindigkeit der sich noch im Ofen befindlichen Tafeln reduziert wird.

Die Geschwindigkeit der beschleunigten Tafel bzw. Reihe von nebeneinander liegenden Tafeln wird zu dem Zeitpunkt wieder auf die Eingangsgeschwindigkeit reduziert, in dem die Tafel bzw. Reihe von Tafeln vollkommen in die Kühlstrecke eingetreten ist.

Besondere Vorteile der schnellen Überführung der Tafeln sind, dass im Ofen die Tafel geglättet wird und der Beginn des Abschreckens auf der ganzen Tafellänge nur mit geringen Zeitunterschieden und deshalb geringer Verwerfung der Tafel erfolgt.

Sobald die in die Kühlstrecke eingetretene Tafel bzw. Reihe von Tafeln auf die Eingangsgeschwindigkeit verzögert worden ist, wird die Geschwindigkeit der im Ofen nachfolgenden Tafeln ebenfalls wieder auf die Eingangsgeschwindigkeit erhöht.

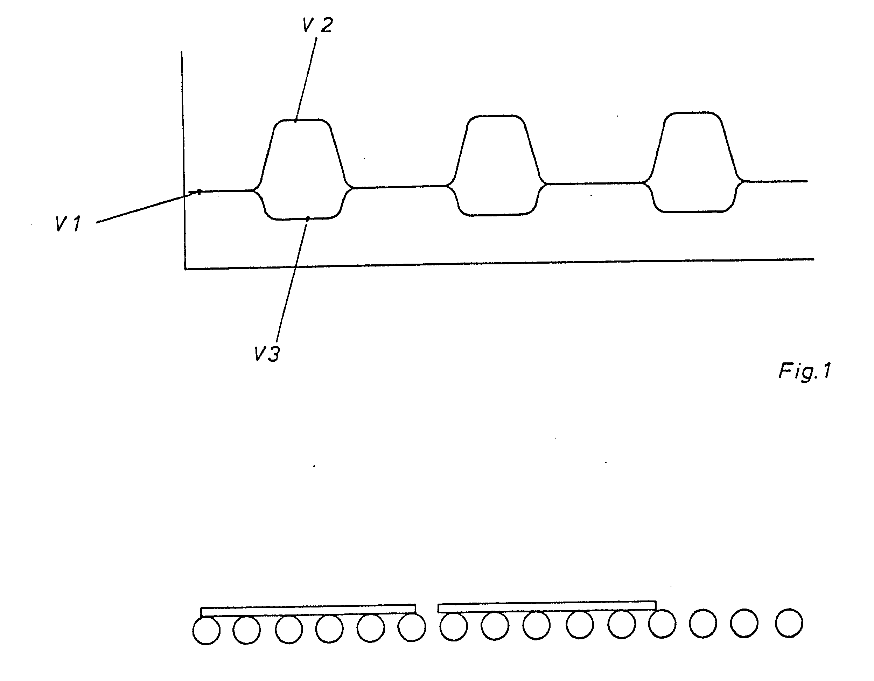

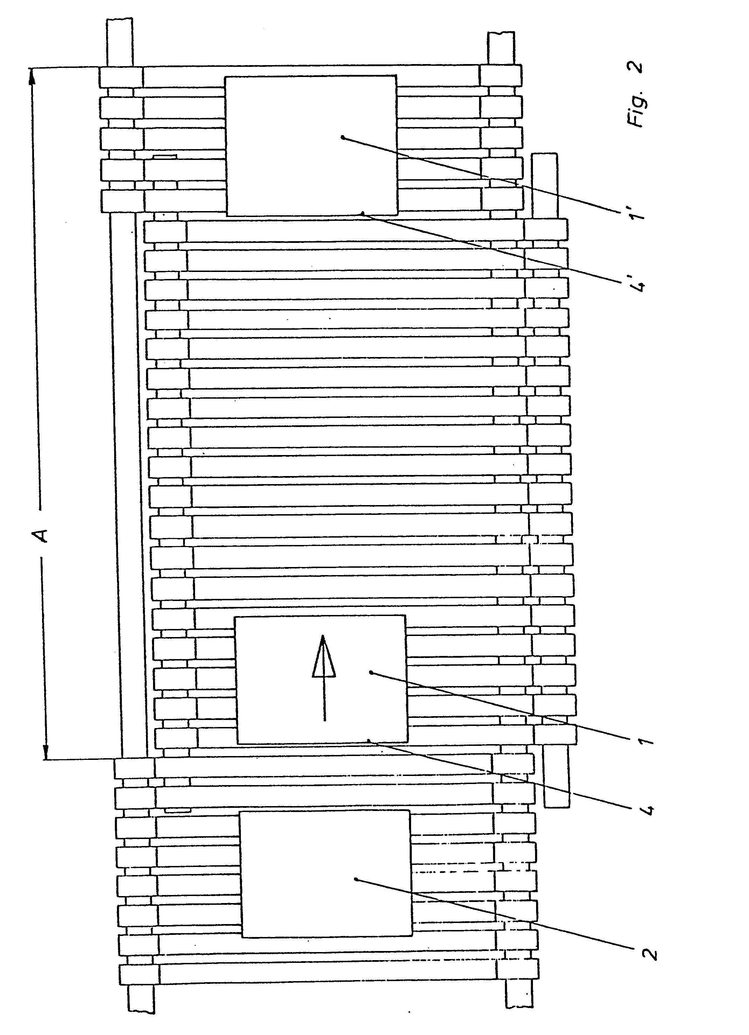

Das erfindungsgemässe Verfahren wird in der Zeichnung schematisch erläutert. Fig. 1 zeigt ein Zeit-Geschwindigkeitsdiagramm des Verfahrens. Als Ordinate ist die Geschwindigkeit der Tafeln, als Abszisse die Zeit aufgetragen. Fig. 2 zeigt in Draufsicht eine schematische Darstellung des Transportrollensystems und der Glastafeln im Ofen.

Die Tafeln durchlaufen die Horizontalhärteanlage mit der Eingangsgeschwindigkeit $V_1$. Beim Erreichen des Ofenausgangs wird die Geschwindigkeit der am Ofenausgang angelangten Tafel oder Reihe von nebeneinander liegenden Tafeln auf den Wert $V_2$ erhöht. Gleichzeitig wird die Geschwindigkeit der nachfolgenden Tafeln im Ofen auf den Wert $V_3$ reduziert. Die Geschwindigkeiten $V_2$ und $V_3$ werden über eine gewisse Zeitspanne beibehalten und dann wieder auf die vorhergehende Eingangsgeschwindigkeit $V_1$ reduziert bzw. erhöht.

Durch eine nicht dargestellte Fotozelle wird die Position 4 der hinteren Kante der Tafel 1 (Fig. 2) abgetastet, bei Erreichen der Position 4 die Tafel auf die Geschwindigkeit $V_2$ beschleunigt und mit dieser Geschwindigkeit über die Strecke A in die nicht dargestellte Abkühlzone überführt. Wenn die Tafel 1 die Position 1' erreicht hat, wird deren Kante 4' wiederum mittels Fotozelle abgetastet und die Geschwindigkeit auf $V_1$ verringert. Gleichzeitig wird die Geschwindigkeit $V_3$ der sich im Ofen befindlichen Tafeln ebenfalls auf $V_1$ gesteigert und so lange beibehalten, bis die folgende Tafel 2 die Position der Tafel 1 erreicht und die Tafel 1 aus der Position 1' heraustransportiert ist. Anschliessend beginnt der Ablauf von vorne.

Der Transport kann pneumatisch, hydraulisch oder elektrisch ausgeführt werden.

## Patentanspruch

Verfahren zum Transportieren von Tafeln (1, 1', 2) aus Glas oder Glaskeramik durch eine Horizontalhärteanlage, bei welchem die Tafeln mit vorgegebener Geschwindigkeit (Eingangsgeschwindigkeit) ($V_1$) einen Tunnelofen und daran anschliessend eine Kühlstrecke durchlaufen, wobei die Tafel oder Reihe von nebeneinander liegenden Tafeln mit einer gegenüber dieser Eingangsgeschwindigkeit erhöhten Geschwindigkeit ($V_2$)

in die Kühlstrecke transportiert wird und die Geschwindigkeit dieser Tafel, bzw. Reihe von Tafeln zu dem Zeitpunkt wieder reduziert wird, zu dem diese Tafel, bzw. Reihe von Tafeln in die Kühlstrecke eingetreten ist, dadurch gekennzeichnet, dass die Geschwindigkeit der Tafel (1) oder Reihe von nebeneinander liegenden Tafeln dann erhöht wird, wenn sie am Ofenausgang angelangt ist und wieder auf die Eingangsgeschwindigkeit reduziert wird wenn die Tafel (1) oder Reihe von nebeneinander liegenden Tafeln vollkommen in die Kühlstrecke eingetreten ist, und dass die Geschwindigkeit der nachfolgenden Tafeln (2) im Ofen zu dem Zeitpunkt, zu dem die vor ihr laufende Tafel (1), bzw. Reihe von Tafeln beschleunigt wird, auf eine geringere Geschwindigkeit ($V_3$) als die Eingangsgeschwindigkeit ($V_1$) reduziert wird, und dass ihre Geschwindigkeit wieder auf die Eingangsgeschwindigkeit ($V_1$) erhöht wird, sobald die in die Kühlstrecke eingetretene Tafel (1), bzw. Reihe von Tafeln auf diese Eingangsgeschwindigkeit ($V_1$) verzögert wird.

## Claim

Method for transporting panels (1, 1', 2) of glass or glass-ceramic through a horizontal hardening system, in which the panels are passed with a pre-determined speed (input speed) ($V_1$) through a tunnel oven and subsequently through a cooling path, the panels or series of panels arranged side by side being transported into the cooling path with an increased speed ($V_2$), compared to the input speed, and the speed of the panel or series of panels, respectively, is again reduced at a time-point when the panel or series of panels, respectively, has entered the cooling path, characterized in that the speed of the panel (1) or series of panels arranged side-by-side is increased when it has reached the exit of the oven, and is again reduced to the input speed when the panel (1) or series of panels arranged side-by-side has completely entered the cooling path, and in that the speed of the subsequent panels (2) in the oven is reduced to a lower speed ($V_3$) compared to the input speed ($V_1$) at the time-point at which the preceding panel (1) or series of panels is accelerated, and that their speed is again increased to the input speed of ($V_1$) as soon as the panel (1) or series of panels entered into the cooling path is decelerated to the input speed ($V_1$).

## Revendication

Procédé pour transporter des plaques (1, 1', 2) de verre ou de vitrocérame à travers une installation de trempe horizontale, selon lequel les plaques traversent à vitesse préfixée (vitesse d'entrée) ($V_1$) un four-tunnel suivi d'une zone de refroidissement, la plaque ou une rangée de plaques juxtaposées étant transportée dans la zone de refroidissement avec une vitesse ($V_2$) accrue par rapport à cette vitesse d'entrée et la vitesse de cette plaque ou de cette rangée de plaques étant de nouveau réduite au moment où la plaque respectivement la rangée de plaques est entrée dans la zone de refroidissement, caractérisé en ce que l'on augmente la vitesse des plaques (1) ou de la rangée de plaques juxtaposées lorsqu'elle est arrivée à la sortie du four et on la réduit de nouveau à la vitesse d'entrée lorsque la plaque (1) ou la rangée de plaques juxtaposées est entrée complètement dans la zone de refroidissement, que l'on réduit la vitesse des plaques (2) suivantes, se trouvant dans le four, à une vitesse ($V_3$) inférieure à la vitesse d'entrée ($V_1$) au moment où la plaque (1) ou la rangée de plaques précédente est accélérée, et que l'on augmente leur vitesse de nouveau à la vitesse d'entrée ($V_1$) dès que la plaque (1) ou la rangée de plaques, entrée dans la zone de refroidissement, est décélérée à la vitesse d'entrée ($V_1$).

V 2

V 1

V 3

Fig.1

Fig. 2